# EUROPÄISCHE PATENTSCHRIFT

(11) **EP 3 800 380 B1**
(45) Veröffentlichungstag und Bekanntmachung des Hinweises auf die Patenterteilung: **01.10.2025**
(21) Anmeldenummer: 20194096.2
(22) Anmeldetag: 02.09.2020
(51) Int. Cl.: F16H 61/00

(54) **GETRIEBESTEUEREINHEIT**
TRANSMISSION CONTROL UNIT
UNITÉ DE COMMANDE DE TRANSMISSION

(30) Priorität: 26.09.2019 DE 102019125893
(43) Veröffentlichungstag der Anmeldung: 07.04.2021
(73) Patentinhaber: ZF CV Systems Europe BV, 1170 Brussels (BE)
(72) Erfinder: DIDWISZUS, Lars, 31157 Sarstedt (DE); BRAMMER, Christian, 29303 Bergen (DE); GERLACH, Timo, 30163 Hannover (DE)
(74) Vertreter: Rabe, Dirk-Heinrich

(56) Entgegenhaltungen:
- WO-A1-2018/171837
- DE-A1- 10 143 929
- DE-A1- 3 313 791
- DE-T2- 69 720 312
- DE-U1- 202010 006 768
- DE-U1- 202013 007 241
- US-A- 4 449 426
- US-A1- 2004 045 614
- US-A1- 2009 122 501

## Beschreibung

Die Erfindung betrifft eine Getriebesteuereinheit, mit einem mehrere Magnetventile tragenden Ventilblock und mit einem Adapterblock zur Anbindung des Ventilblocks an ein pneumatisch und/oder hydraulisch mittels eines Fluides zu steuernden Getriebes, wobei im Adapterblock Steuerkanäle ausgebildet sind, welche jeweils mindestens einem Magnetventil zugeordnet sind, wobei an einer dem Adapterblock zugewandten Unterseite eines Gehäuses des Ventilblocks jedem Magnetventil eine Austrittsöffnung zugeordnet ist, welche jeweils mittels des zugeordneten Magnetventils mit dem Fluid beaufschlagbar ist, wobei die mindestens eine Austrittsöffnung in eine Vertiefung in der Unterseite des Gehäuses des Ventilblocks einmündet sowie jede Vertiefung des Ventilblocks von Rippen fensterrahmenartig eingefasst ist, und wobei zwischen dem Adapterblock und dem Ventilblock ein Dichtgitter zur individuellen Abdichtung der Steuerkanäle untereinander sowie gegenüber der äußeren Umgebung angeordnet ist.

Konventionelle Kraftfahrzeuge werden heutzutage noch überwiegend von einer herkömmlichen Brennkraftmaschine angetrieben, der ein Getriebe zur Drehmomentanpassung antriebswirksam nachgeordnet ist. Der Kraftfluss zwischen der Brennkraftmaschine und dem Getriebe kann, beispielsweise zur Durchführung eines Gangwechsels, mithilfe einer zwischen der Brennkraftmaschine und dem Getriebe angeordneten Kupplung zeitweise unterbrochen werden. Bei einem derartigen Getriebe kann es sich zum Beispiel um ein konventionelles, nur manuell betätigbares Handschaltgetriebe oder um ein vollständig automatisiertes Schaltgetriebe handeln. Im Fall eines automatisierten Schaltgetriebes erfolgen die Gangwechsel mit Hilfe von zum Beispiel pneumatisch und/oder hydraulisch betätigten Aktoren. Mit Hilfe der Aktoren werden über Schaltstangen Schaltgabeln betätigt, mit deren Hilfe Schaltmuffen zum Durchführen des eigentlichen Gangwechsels verschiebbar sind. Die Betätigung der Aktoren wird von einer Getriebesteuereinheit gesteuert, die im Allgemeinen an der Oberseite des Getriebegehäuses angeordnet ist. Im Übrigen folgt der konstruktive Aufbau eines automatisierten Schaltgetriebes weitgehend dem eines hergebrachten Handschaltgetriebes und erreicht damit auch dessen hohen mechanischen Wirkungsgrad.

Zur Ansteuerung der getriebeinternen Aktoren kommt in der Regel eine Getriebesteuereinheit mit einem Ventilblock mit mehreren Magnetventilen zum Einsatz. Der Ventilblock trägt die Magnetventile und verteilt im Fall von pneumatischen Aktoren die Druckluft an die unterschiedlichen Aktoren. Um ein bestimmtes Ansteuerverhalten zu erzielen, insbesondere im Hinblick auf ein Zeitverhalten und/oder einen zur Ansteuerung der Aktoren erforderlichen Druck, ist es erforderlich, den Luftstrom für jeden Getriebeaktor individuell auf vorgegebene Werte einzustellen.

Bei bekannten Ausführungsformen von solchen Getriebesteuereinheiten erfolgt dies unter der Inkaufnahme eines hohen Fertigungsaufwandes zum Beispiel durch den Einsatz unterschiedlicher Magnetventile mit speziell angepassten Querschnitten, eine individuelle Bearbeitung der Bohrungen innerhalb des Ventilblocks und/oder in Standardbohrungen eingepresste Düsen mit unterschiedlichen Öffnungsquerschnittsflächen. Darüber hinaus sind zur Sicherstellung einer dauerhaft ordnungsgemäßen Funktion der Getriebesteuereinheit oftmals separate Filterelemente zur Reinigung der Druckluft oder der Hydraulikflüssigkeit erforderlich, wodurch sich der Fertigungsaufwand der Getriebesteuereinheit weiter erhöht. Die Filterelemente können zum Beispiel in Zu- oder Abführschläuche oder in Magnetventile integriert sein. Im Fall eines Defektes eines in ein Magnetventil integrierten Filters ist es daher vielfach erforderlich, das komplette Magnetventil zu ersetzen oder aufwendig zu reparieren.

DE202013007241U betrifft eine Flachdichtung mit mindestens einer metallischen Lage, wobei in der metallischen Lage mindestens eine Durchgangsöffnung angeordnet ist und auf zumindest einer Seite der metallischen Lage ein Sieblage angeordnet ist, die mindestens eine der mindestens einen Durchgangsöffnung überdeckt.

DE69720312T offenbart eine Verteiler- und Ventilvorrichtung oder -anordnung aufweisend ein Verzweigungsblock mit mehreren Einlasskanälen und mehreren Auslasskanälen, antriebsgesteuerte Ventilmittel, die an dem Verzweigungsblock angeordnet sind und dazu dienen, auf Betätigung hin die Strömung zwischen den Ein- und Auslasskanälen selektiv zu steuern.

DE202010006768U offenbart eine metallische Flachdichtung mit mindestens einer metallischen Lage, die mindestens zwei Durchgangsöffnungen für Montageelemente aufweist, wobei die mindestens eine metallische Lage aus einem metallischen Maschenmaterial gebildet ist.

WO2018/171837A offenbart eine Getriebesteuereinheit mit einem mehrere Magnetventile tragenden Ventilblock.

Der Erfindung lag daher die Aufgabe zugrunde, eine kostengünstig herzustellende Getriebesteuereinheit mit einem, insbesondere durch eine reduzierte Komponentenzahl und eine größere Anzahl von Gleichteilen, vereinfachten konstruktiven Aufbau vorzustellen.

Zur Lösung dieser Aufgabe wird mit einer Getriebesteuereinheit erreicht, welche die Merkmale des Anspruchs 1 aufweist. Vorteilhafte Weiterbildungen dieser Getriebesteuereinheit sind in den abhängigen Ansprüchen definiert.

Demnach betrifft die Erfindung eine Getriebesteuereinheit, mit einem mehrere Magnetventile tragenden Ventilblock und mit einem Adapterblock zur Anbindung des Ventilblocks an ein pneumatisch und/oder hydraulisch mittels eines Fluides zu steuernden Getriebes, wobei im Adapterblock Steuerkanäle ausgebildet sind, welche jeweils mindestens einem Magnetventil zugeordnet sind, wobei an einer dem Adapterblock zugewandten Unterseite eines Gehäuses des Ventilblocks jedem Magnetventil eine Austrittsöffnung zugeordnet ist, welche jeweils mittels des zugeordneten Magnetventils mit dem Fluid beaufschlagbar ist, wobei die mindestens eine Austrittsöffnung in eine Vertiefung in der Unterseite des Gehäuses des Ventilblocks einmündet sowie jede Vertiefung des Ventilblocks von Rippen fensterrahmenartig eingefasst ist, und wobei zwischen dem Adapterblock und dem Ventilblock ein Dichtgitter zur individuellen Abdichtung der Steuerkanäle untereinander sowie gegenüber der äußeren Umgebung angeordnet ist.

Zur Lösung der gestellten Aufgabe ist bei dieser Getriebesteuereinheit zusätzlich vorgesehen, dass das Dichtgitter zumindest weitgehend deckungsgleich mit den Rippen des Ventilblocks netzartig verlaufende Dichtstege aufweist, welche Dichtrahmen ausbilden, wobei jeder Vertiefung ein Dichtrahmen zugeordnet ist und die Dichtrahmen jeweils eine höchstens bereichsweise ausgebildete Membran aufweisen. Die hier vorgeschlagene Getriebesteuereinheit vereinfacht deren Fertigungsaufwand beträchtlich, da beispielsweise die Austrittsöffnungen an der Unterseite der Ventilsteuereinheit gleich ausgebildet sein können, beispielsweise identisch gebohrt oder gefräst sind. Die Anpassung an unterschiedliche Erfordernisse des zu steuernden Getriebes, insbesondere hinsichtlich der Volumenströme des zur Steuerung dienenden Fluides, erfolgt allein mithilfe der Membranen des Dichtgitters. Für den Fall, dass der Dichtrahmen vollständig offen ausgebildet ist, ergibt sich ein minimaler Strömungswiderstand. Darüber hinaus lassen sich mittels der Membran zusätzliche Funktionalitäten, wie zum Beispiel ein Filter, ohne zusätzlichen Einbauraumbedarf realisieren. Bei den Magnetventilen handelt es sich in Abhängigkeit von den Aktoren des zu steuernden Getriebes um elektrisch schalt- und/oder regelbare Ventile für ein Fluid, insbesondere in der Form von Druckluft oder einer im Wesentlichen inkompressiblen Hydraulikflüssigkeit.

Eine vorteilhafte Weiterbildung des Erfindungsgegenstandes sieht vor, dass die Rippen an der Unterseite des Gehäuses des Ventilblocks, die einzelnen Dichtrahmen des Dichtgitters sowie die Steuerkanäle im Adapterblock jeweils zumindest weitgehend dieselbe Umfangsgeometrie aufweisen. Hierdurch wird eine Reduzierung des Strömungsquerschnitts durch das Dichtgitter weitgehend vermieden.

Erfindungsgemäß weist mindestens eine Membran wenigstens eine runde, vorzugsweise kreisrunde Düsenöffnung für mindestens ein zugeordnetes Magnetventil auf. Die Düsenöffnung kann bei Bedarf aber auch oval sein oder eine andere Geometrie aufweisen. Hierdurch kann unbeschadet der erfindungsgemäß standardisierten Austrittsöffnungen an der Unterseite des Gehäuses des Ventilblocks eine individuelle strömungstechnische Anpassung an die den einzelnen Magnetventilen zugeordneten Strömungskanäle im Adapterblock und an das zu steuernde Getriebe erfolgen. Ferner können gleichartige Magnetventile mit einem maximal notwendigen Querschnitt zum Einsatz kommen, da die individuelle Strömungsregulierung in den Steuerkanälen im Wesentlich durch die Düsenöffnungen in den Membranen erfolgt. Die Querschnittsfläche der Düsenöffnungen ist hierbei jeweils sehr klein gegenüber einer geschlossen Restfläche der betreffenden Membranen.

Weiter kann mit Vorteil vorgesehen sein, dass mindestens eine Membran zumindest bereichsweise als ein Filterelement ausgebildet ist. Infolgedessen entfallen zusätzliche bauraumerhöhende Filter innerhalb des Ventilblocks, die ansonsten insbesondere in den Magnetventilen oder in Zu- oder Abführleitungen positioniert sind. Es können darüber hinaus standardisierte Magnetventile mit identischen Durchlassquerschnitten als Gleichteile ohne integrierte Filterfunktion verwendet werden. Die Filterfunktion ist unbeschadet des Einsatzes von standardisierten, filterlosen Magnetventilen genau da realisierbar, wo sie erforderlich ist. Vorzugsweise nimmt ein Filterelement die vollständige Fläche eines betreffenden Dichtrahmens ein. Alternativ dazu kann das Filterelement sich auch nur über einen Teil der Membranfläche erstrecken, die in einer solchen Konstellation im Übrigen wiederum undurchlässig beziehungsweise fluiddicht ausgebildet ist.

Die erfindungsgemäße Ausführungsform sieht vor, dass wenigstens zwei Düsenöffnungen von mindestens zwei Membranen unterschiedlich groß sind. Hierdurch ist eine individuelle Anpassung des Volumenstroms des Fluides in die Steuerkanäle des Adapterblocks möglich, obwohl sämtliche Austrittsöffnungen an der Unterseite des Gehäuses des Ventilblocks identisch ausgebildet sind. Infolgedessen ist eine Reduzierung des Fertigungsaufwand der Getriebesteuereinheit realisierbar.

Vorzugsweise ist die Materialstärke der Membranen höchstens gleichgroß ist wie die Materialstärke der die Membranen umfangsseitig einfassenden Dichtstege. Infolgedessen ist eine Anpassung der Materialstärke der Membranen realisierbar, insbesondere zur Erhöhung der mechanischen Belastbarkeit sowie zur Vermeidung von Schwingungen. Vorzugsweise schließen die Membranen zur Vereinfachung des Fertigungsprozesses jeweils einseitig oder beidseitig bündig mit den sie einfassenden Dichtstegen ab. Alternativ dazu können die Membranen auch beidseits nicht bündig beziehungsweise zumindest geringfügig vertieft in Bezug zu den Dichtstegen ausgebildet sein.

Bevorzugt ist das Dichtgitter aus einem metallischen Material hergestellt. Hierdurch kann das Dichtgitter bei höheren Betriebsdrücken und/oder Temperaturen im Bereich der pneumatischen oder hydraulischen Getriebesteuereinheit zum Einsatz kommen.

Das Dichtgitter kann aber auch aus einem Kunststoff bestehen, welches eine großserientaugliche, leichtgewichtige, kostengünstige sowie hinsichtlich der Maßhaltigkeit mit hoher Verlässlichkeit durchführbare Herstellung des Dichtgitters ermöglicht.

Es kann aber auch vorgesehen sein, dass das Dichtgitter aus einem an eine metallische Struktur anvulkanisierten Gummi oder aus einem an eine metallische Struktur angeordnetem Silikon besteht. Infolgedessen ergibt sich eine ausgezeichnete Abdichtungswirkung bei einer zugleich hinreichend hohen mechanischen und/oder thermischen Belastbarkeit des Dichtgitters.

Die Erfindung wird nachfolgend anhand von mehreren Ausführungsbeispielen beschrieben, welche in der beigefügten Zeichnung dargestellt sind. In der Zeichnung zeigt
Fig. 1 eine perspektivische schematische Ansicht einer erfindungsgemäßen Getriebesteuereinheit mit einem Ventilblock und einem darunter angeordneten Adapterblock,
Fig. 2 eine perspektivische Draufsicht auf den Adapterblock gemäß Fig. 1 bei abgenommenem Ventilblock,
Fig. 3 eine perspektivische Unteransicht des Ventilblocks gemäß Fig. 1,
Fig. 4 eine erste Ausführungsform eines Dichtgitters der Getriebesteuereinheit gemäß Fig. 1,
Fig. 5 eine zweite Ausführungsform eines Dichtgitters für die Getriebesteuereinheit gemäß Fig. 1, und
Fig. 6 eine dritte Ausführungsform eines Dichtgitters für die Getriebesteuereinheit gemäß Fig. 1.

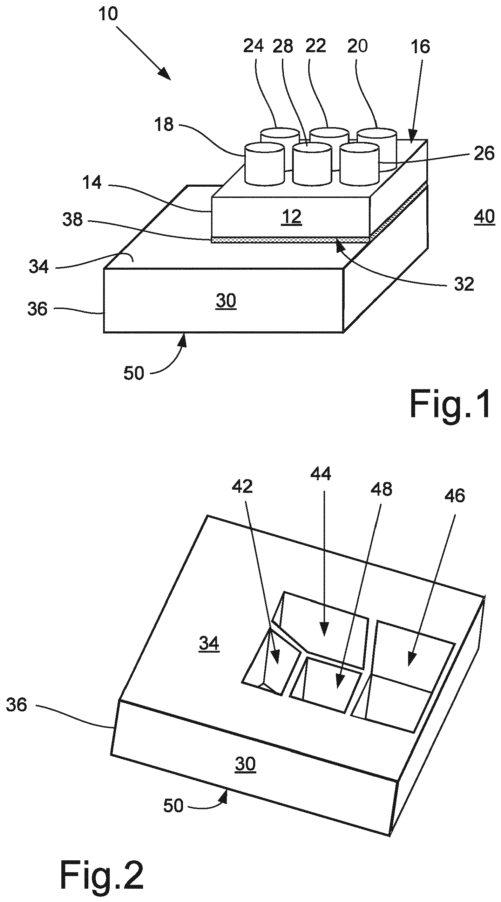

Die Fig. 1 zeigt demnach eine schematische perspektivische Ansicht einer erfindungsgemäßen Getriebesteuereinheit. Diese Getriebesteuereinheit 10 weist einen Ventilblock 12 mit einem im Wesentlichen quaderförmigen und weitgehend massiven Gehäuse 14 auf, an dessen Oberseite 16 hier lediglich exemplarisch sechs Magnetventile 18, 20, 22, 24, 26, 28 angeordnet sind. Bei diesen Magnetventilen 18 bis 28 handelt es sich um elektrisch steuer- und/oder regelbare Ventile für ein beliebiges Fluid, insbesondere in der Form von Druckluft und/oder einer hydraulischen Flüssigkeit.

Unterhalb des Ventilblocks 12 befindet sich ein gleichfalls im Wesentlichen quaderförmiger Adapterblock 30 zur pneumatischen und/oder hydraulischen Anpassung der Funktionen des Ventilblocks 12 an ein hier nicht dargestelltes, mit Hilfe der Magnetventile 18, 20, 22, 24, 26, 28 der Getriebesteuereinheit 10 zu steuerndes Getriebe eines Kraftfahrzeugs. Zwischen der Unterseite 32 des Ventilblocks 12 und der Oberseite 34 eines Gehäuses 36 des Adapterblocks 30 ist ferner eine erste Ausführungsform eines erfindungsgemäßen Dichtgitters 38 zur fluidischen Abdichtung angeordnet. Das Dichtgitter 38 ist hierbei nach Art einer Flachdichtung ausgeführt. Mittels des Dichtgitters 38 erfolgt die Abdichtung von hier verdeckten, innerhalb des Adapterblocks 30 ausgebildeten Steuerkanälen 42, 44, 46, 48 (siehe Fig. 2) untereinander sowie gegenüber einer äußeren Umgebung 40. Der Ventilblock 12 ist darüber hinaus mittels nicht dargestellter Befestigungsmittel mechanisch fest mit dem Adapterblock 30 verbunden.

Gemäß Fig. 2 weist das Gehäuse 36 des Adapterblocks 30 hier lediglich beispielhaft vier Steuerkanäle 42, 44, 46 48 mit jeweils unterschiedlichen, vieleckigen Querschnittsgeometrie auf. Die vier Steuerkanäle 42, 44, 46 48 durchsetzen das Gehäuse 36 des Adapterblocks 30 ausgehend von dessen Oberseite 34 bis hin zur Unterseite 50 des Gehäuses 36 des Adapterblocks 30 vollständig. Außerdem verlaufen die Steuerkanäle 42, 44, 46 48 im Wesentlichen senkrecht zur Oberseite 34 und Unterseite 50 des Adapterblocks 30, wobei die Oberseite 34 und die Unterseite 50 des Adapterblocks 30 parallel zueinander verlaufen und plan ausgebildet sind.

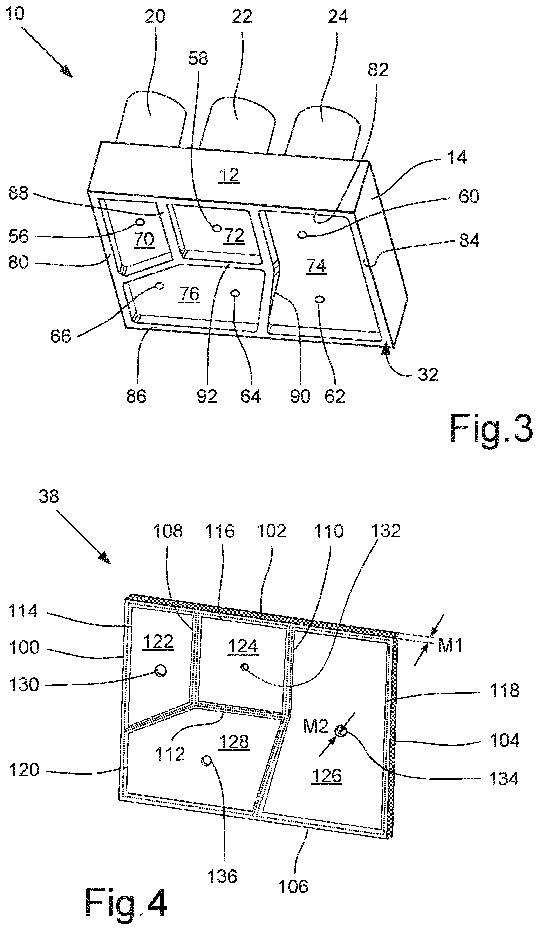

Die Fig. 3 zeigt eine perspektivische Unteransicht des Ventilblocks 12 gemäß Fig. 1. Jedem der drei sichtbaren Magnetventile 20, 22, 24 sowie der hier verdeckten, drei weiteren Magnetventile des Ventilblocks 12 der Getriebesteuereinheit 10 ist eine Austrittsöffnung 56, 58, 60, 62, 64, 66 zugordnet. Jede dieser sechs Austrittsöffnungen 56, 58, 60, 62, 64, 66 ist mittels eines der zugeordneten Magnetventile 20, 22, 24 sowie der zugeordneten verdeckten Magnetventile 18, 26, 28 individuell mit dem nicht dargestellten Fluid beaufschlagbar.

In der Unterseite 32 des Gehäuses 14 der Ventilblocks 12 sind hier lediglich exemplarisch vier muldenartige Vertiefungen 70, 72, 74, 76 ausgebildet, deren vieleckige Umfangskonturen jeweils im Wesentlichen mit den Umfangskonturen der Steuerkanäle 42, 44, 46, 48 des Adapterblocks 30 korrespondieren. Jede der vier zum Beispiel spanend hergestellten Vertiefungen 70, 72, 74, 76 ist hier von jeweils vier der insgesamt sieben Rippen 80, 82, 84, 86, 88, 90, 92 des Ventilblocks 12 rahmenartig eingefasst. Diese Rippen 80 bis 92 sind integral an dem Gehäuse 14 des Ventilblocks 12 der Getriebesteuereinheit 10 ausgebildet.

Die sechs Austrittsöffnungen 56, 58, 60, 62, 64, 66 weisen jeweils eine identische Querschnittsgeometrie beziehungsweise den gleichen Durchmesser auf, da die notwendige Anpassung an ein vom Getriebe vorgegebenes fluidisches Ansteuerverhalten erfindungsgemäß allein mit Hilfe eines Dichtgitters 38 mit entsprechend angepassten Düsenöffnungen erfolgt (vergleiche mit Fig. 4). Aufgrund der im Wesentlichen gleichartigen Ausführung der Austrittsöffnungen 56, 58, 60, 62, 64, 66 ist eine erhebliche Senkung der Fertigungskosten des Gehäuses 14 des Ventilblocks 12 realisierbar. Unter anderem lassen sich die erforderlichen spanenden Fertigungsprozesse, wie zum Beispiel Fräsen oder Bohren, beträchtlich vereinfachen.

Die Fig. 4 zeigt eine erste Ausführungsform eines Dichtgitters 38 der Getriebesteuereinheit 10 gemäß Fig. 1. Das Dichtgitter 38 weist im Wesentlichen geometrisch deckungsgleich mit den unterseitigen Rippen 80, 82, 84, 86, 88, 90, 92 des Ventilblocks 12 orientierte Dichtstege 100, 102, 104, 106, 108, 110, 112 auf, die jeweils einen, einer der vier Vertiefungen 70, 72, 74, 76 (siehe. Fig. 3) zugeordneten, umlaufenden Dichtrahmen 114, 116, 118, 120 definieren. Die vier Dichtrahmen 114, 116, 118, 120 sind jeweils mit gepunkteten Linien dargestellt. Die vier Dichtrahmen 114, 116, 118, 120 weisen hier lediglich exemplarisch jeweils eine unterschiedliche vieleckige Umfangsgeometrie auf, welche mit den Rippen 80, 82, 84, 86, 88, 90, 92 an der Unterseite 32 des Ventilblocks 12 im Wesentlichen geometrisch deckungsgleich ist.

In jedem der vier Dichtrahmen 114, 116, 118, 120 ist jeweils eine höchstens bereichsweise ausgebildete, geschlossene beziehungsweise fluiddichte Membran 122, 124, 126, 128 angeordnet, welche jeweils mindestens eine vorzugsweise kreisrunde Düsenöffnung 130, 132, 134, 136 aufweisen. Alternativ dazu können die Düsenöffnungen 130, 132, 134, 136 jede von der Kreisform abweichende Querschnittsgeometrie aufweisen.

Um ungeachtet der identisch ausgeführten Austrittsöffnungen 56, 58, 60, 62, 64, 66 im Ventilblock 12 ein bestimmtes Ansteuerverhalten, insbesondere im Hinblick auf ein angestrebtes Zeitverhalten und einen Druckverlauf, zu erreichen, weisen die Düsenöffnungen 130, 132, 134, 136 hier lediglich beispielhaft jeweils eine kreisrunde Querschnittsgeometrie mit einem jeweils unterschiedlichen Durchmesser auf. Darüber hinaus ermöglicht es die Erfindung, gleichartige Magnetventile mit einem jeweils identischen, maximal betriebsnotwendigen Nominalquerschnitt einzusetzen, woraus sich weitere Kosteneinsparungen ergeben. Erfindungsgemäß sind die Düsenöffnungen 130, 132, 134, 136 von mindestens zwei Membranen 122, 124, 126, 128 unterschiedlich groß beziehungsweise weisen im Fall einer kreisförmigen Querschnittsgeometrie jeweils einen unterschiedlichen Durchmesser auf.

Die Membranen 122, 124, 126, 128 können einseitig oder beidseitig bündig mit den Dichtrahmen 114, 116, 118, 120 beziehungsweise mit den Dichtstegen 100, 102, 104, 106, 108, 110, 112 abschließen. Alternativ dazu können die Membranen 122, 124, 126, 128 auch beidseits nicht bündig zu den Dichtrahmen 114, 116, 118, 120 ausgebildet sein. Die Materialstärke M1 der Dichtrahmen 114, 116, 118, 120 ist einheitlich groß und dabei höchstens gleich groß wie die Materialstärke M2 der vier Membranen 122, 124, 126, 128.

Das Dichtgitter 38 kann vollständig aus einem metallischen Material oder aus einem thermoplastischen, duroplastischen und/oder elastomeren Kunststoff hergestellt sein. Gegebenenfalls kann der eingesetzte Kunststoff zur Erhöhung der mechanischen Belastbarkeit und der Temperaturfestigkeit eine Faserverstärkung aufweisen. Alternativ dazu kann das Dichtgitter 38 einschließlich der Membranen 122, 124, 126, 128 mit einem metallischen Material und mit einem beliebigen Kunststoff, vorzugsweise mit einem anvulkanisierbaren Elastomer, wie einem Gummi oder einer Gummimischung, hergestellt sein. Weiterhin kann anstelle von Gummi oder einer Gummimischung ein Silikon oder ein anderes Elastomer zum Einsatz kommen.

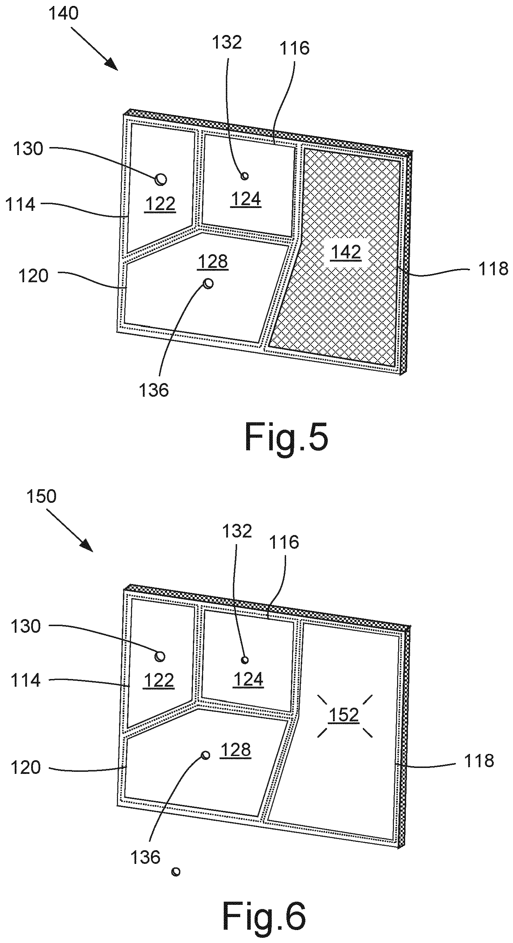

Die Fig. 5 zeigt eine zweite Ausführungsform eines Dichtgitters 140 für die Getriebesteuereinheit 10 gemäß Fig. 1. Der konstruktive Aufbau dieser zweiten Ausführungsform eines Dichtgitters 140 ist mit den vier Dichtrahmen 114, 116, 118, 120 sowie seinen drei Membranen 122, 124, 128 und den darin eingebrachten drei Düsenöffnungen 130, 132, 136 im Wesentlichen identisch mit dem der ersten Ausführungsform des Dichtgitters 38 gemäß den Figuren 1 und 4. Im Unterschied zu der ersten Ausführungsform ist anstelle der geschlossen Membran 126 mit der dortigen Düsenöffnung 134 innerhalb des Dichtrahmens 118 hier lediglich beispielhaft ein homogenes Filterelement 142 vorgesehen, wobei das Filterelement 142 den Dichtrahmen 118 vollständig ausfüllt. Abweichend davon kann das Filterelement 142 den Dichtrahmen 118 auch nur bereichsweise ausfüllen, wobei in der verbleibenden Restfläche eine geschlossene, fluiddichte Membran mit einer optionalen Düsenöffnung oder eine Aussparung beziehungsweise eine Leerfläche vorgesehen sein kann.

Durch das Filterelement 142 übernimmt das Dichtgitter 140 zugleich die Aufgabe von ansonsten notwendigen separaten Filtern, nämlich das dem zugehörigen Steuerkanal zugeführte Fluid zu filtern und so Funktionsbeeinträchtigungen der Aktoren innerhalb des zu steuernden Getriebes durch etwaige, im Fluid mitgeführte Verunreinigungen zu vermeiden. Hierdurch sind nun keine separaten Filter innerhalb der Magnetventile und/oder etwaigen Zuleitungs- oder Ableitungsleitungen für das Fluid mehr erforderlich, so dass filterfreie, baugleiche Magnetventile problemlos nutzbar sind, welches zu einer weiteren Kostenoptimierung der Getriebesteuereinheit beiträgt. Zudem ist im Fall einer etwaigen Beschädigung des Filterelements 142 eine Funktionsbeeinträchtigung des zugehörigen Magnetventils zum Beispiel durch sich ablösen Filterteile, anders als bei einem Magnetventil mit integrierter Filterfunktion, zuverlässig ausgeschlossen. Damit entfällt in solchen Fällen ein aufwendiger Austausch des betreffenden Magnetventils des Ventilblocks 12 mit anschließender Entsorgung. Jeder der weiteren drei Membranen 122, 124, 128 des Dichtgitters 140 gemäß Fig. 5 kann dementsprechend zumindest bereichsweise ein Filterelement analog zu dem Filterelement 142 aufweisen.

Die Fig. 6 zeigt eine dritte Ausführungsform eines Dichtgitters 150 für die Getriebesteuereinheit 10 gemäß Fig. 1. Dieses Dichtgitter 150 verfügt ebenso wie das Dichtgitter 140 gemäß Fig. 5 über die vier Dichtrahmen 114, 116, 118, 120, wobei in diesen die geschlossenen, fluiddichten Membranen 122, 124, 128 mit den kreisrunden Düsenöffnungen 130, 132, 136 ausgebildet sind. Abweichend von der zweiten Ausführungsform gemäß Fig. 5 ist jedoch innerhalb des rechten Dichtrahmens 118 kein Filterelement 142 vorhanden. Vielmehr ist dieser Dichtrahmen 118 vollständig leer beziehungsweise frei durchgängig ausgeführt und weist daher eine vollflächige Aussparung 152 auf. Infolgedessen besteht keinerlei Querschnittsreduzierung und der dem Dichtrahmen 118 hier lediglich beispielhaft zugeordnete Steuerkanal des Adapterblocks 30 kann mittels zugehörigen Magnetventile (siehe Fig. 2, Bezugsziffern 24, 26, 30, 46) erforderlichenfalls mit dem höchstmöglichen Volumenstrom des Fluides beaufschlagt werden.

Ein erfindungsgemäßes Dichtgitter kann grundsätzlich zumindest bereichsweise leere Dichtrahmen beziehungsweise Dichtrahmen mit einer zumindest bereichsweisen Aussparung und/oder Dichtrahmen mit zumindest bereichsweise ausgebildeten geschlossenen, fluiddichten Membranen mit mindestens einer Düsenöffnung und/oder Dichtrahmen mit einem zumindest bereichsweise eingespannten Filterelement aufweisen.

### Bezugszeichenliste (Bestandteil der Beschreibung)

- 10: Getriebesteuereinheit
- 12: Ventilblock
- 14: Gehäuse des Ventilblocks
- 16: Oberseite des Gehäuses
- 18: Erstes Magnetventil
- 20: Zweites Magnetventil
- 22: Drittes Magnetventil
- 24: Viertes Magnetventil
- 26: Fünftes Magnetventil
- 28: Sechstes Magnetventil
- 30: Adapterblock
- 32: Unterseite des Gehäuses
- 34: Oberseite des Adapterblocks
- 36: Gehäuse des Adapterblocks
- 38: Dichtgitter
- 40: Umgebung
- 42: Erster Steuerkanal
- 44: Zweiter Steuerkanal
- 46: Dritter Steuerkanal
- 48: Vierter Steuerkanal
- 50: Unterseite des Adapterblocks
- 56: Erste Austrittsöffnung
- 58: Zweite Austrittsöffnung
- 60: Dritte Austrittsöffnung
- 62: Vierte Austrittsöffnung
- 64: Fünfte Austrittsöffnung
- 66: Sechste Austrittsöffnung
- 70: Erste Vertiefung
- 72: Zweite Vertiefung
- 74: Dritte Vertiefung
- 76: Vierte Vertiefung
- 80: Erste Rippe
- 82: Zweite Rippe
- 84: Dritte Rippe
- 86: Vierte Rippe
- 88: Fünfte Rippe
- 90: Sechste Rippe
- 92: Siebte Rippe
- 100: Erster Dichtsteg
- 102: Zweiter Dichtsteg
- 104: Dritter Dichtsteg
- 106: Vierter Dichtsteg
- 108: Fünfter Dichtsteg
- 110: Sechster Dichtsteg
- 112: Siebter Dichtsteg
- 114: Erster Dichtrahmen
- 116: Zweiter Dichtrahmen
- 118: Dritter Dichtrahmen
- 120: Vierter Dichtrahmen
- 122: Erste Membran
- 124: Zweite Membran
- 126: Dritte Membran
- 128: Vierte Membran
- 130: Erste Düsenöffnung
- 132: Zweite Düsenöffnung
- 134: Dritte Düsenöffnung
- 136: Vierte Düsenöffnung
- 140: Dichtgitter
- 142: Filterelement
- 150: Dichtgitter
- 152: Aussparung
- M1: Materialstärke des Dichtrahmens
- M2: Materialstärke der Membran

## Patentansprüche

1. Getriebesteuereinheit (10), mit einem mehrere Magnetventile (18, 20, 22, 24, 26, 28) tragenden Ventilblock (12) und mit einem Adapterblock (30) zur Anbindung des Ventilblocks (12) an ein pneumatisch und/oder hydraulisch mittels eines Fluides zu steuernden Getriebes, wobei im Adapterblock (30) Steuerkanäle (42, 44, 46, 48) ausgebildet sind, welche jeweils mindestens einem Magnetventil (18, 20, 22, 24, 26, 28) zugeordnet sind, wobei an einer dem Adapterblock (30) zugewandten Unterseite (32) eines Gehäuses (14) des Ventilblocks (12) jedem Magnetventil (18, 20, 22, 24, 26, 28) eine Austrittsöffnung (56, 58, 60, 62, 64, 66) zugeordnet ist, welche jeweils mittels des zugeordneten Magnetventils (18, 20, 22, 24, 26, 28) mit dem Fluid beaufschlagbar ist, wobei die mindestens eine Austrittsöffnung (56, 58, 60, 62, 64, 66) in eine Vertiefung (70, 72, 74, 76) in der Unterseite (32) des Gehäuses (14) des Ventilblocks (12) einmündet sowie jede Vertiefung (70, 72, 74, 76) des Ventilblocks (12) von Rippen (80, 82, 84, 86, 88, 90, 92) fensterrahmenartig eingefasst ist,
und wobei zwischen dem Adapterblock (30) und dem Ventilblock (12) ein Dichtgitter (38, 130, 140) zur individuellen Abdichtung der Steuerkanäle (42, 44, 46, 48) untereinander sowie gegenüber der äußeren Umgebung (40) angeordnet ist,
wobei das Dichtgitter (38, 140, 150) zumindest weitgehend deckungsgleich mit den Rippen (80, 82, 84, 86, 88, 90, 92) des Ventilblocks (12) netzartig verlaufende Dichtstege (100, 102, 104, 106, 108, 110, 112) aufweist, die Dichtrahmen (114, 116, 118, 120) ausbilden, wobei jeder Vertiefung (70, 72, 74, 76) ein Dichtrahmen (114, 116, 118, 120) zugeordnet ist und die Dichtrahmen (114, 116, 118, 120) jeweils eine höchstens bereichsweise ausgebildete Membran (122, 124, 126, 128) aufweisen, wobei mindestens eine Membran (122, 124, 126, 128) mindestens eine runde Düsenöffnung (130, 132, 134, 136) für mindestens ein zugeordnetes Magnetventil (18, 20, 22, 24, 26, 28) aufweist, wobei wenigstens zwei Düsenöffnungen (130, 132, 134, 136) von mindestens zwei Membranen (122, 124, 126, 128) unterschiedlich groß sind.

2. Getriebesteuereinheit nach Anspruch 1, **dadurch gekennzeichnet, dass** die Rippen (80, 82, 84, 86, 88, 90, 92) an der Unterseite (32) des Gehäuses (14) des Ventilblocks (12), die einzelnen Dichtrahmen (114, 116, 118, 120) des Dichtgitters (38, 140, 150) sowie die Steuerkanäle (42, 44, 46, 48) im Adapterblock (30) jeweils zumindest weitgehend dieselbe Umfangsgeometrie aufweisen.

3. Getriebesteuereinheit nach Anspruch 1 oder 2, **dadurch gekennzeichnet, dass** mindestens eine Membran (126) zumindest bereichsweise als ein Filterelement (142) ausgebildet ist.

4. Getriebesteuereinheit nach einem der vorherigen Ansprüche, **dadurch gekennzeichnet, dass** die Materialstärke (M2) der Membranen (122, 124, 126, 128) höchstens gleichgroß ist wie die Materialstärke (M1) der die Membranen (122, 124, 126, 128) umfangsseitig einfassenden Dichtstege (100, 102, 104, 106, 108, 110, 112).

5. Getriebesteuereinheit nach Anspruch 4, **dadurch gekennzeichnet, dass** das Dichtgitter (38, 140, 150) aus einem metallischen Material besteht.

6. Getriebesteuereinheit nach Anspruch 4, **dadurch gekennzeichnet, dass** das Dichtgitter (38, 140, 150) aus einem Kunststoff besteht.

7. Getriebesteuereinheit nach Anspruch 5 oder 6, **dadurch gekennzeichnet, dass** das Dichtgitter (38, 140, 150) mit einem metallischen Material und mit einem Elastomer, insbesondere einem anvulkanisierten Gummi oder einem Silikon, gebildet ist.

8. Getriebesteuereinheit nach Anspruch 7, **dadurch gekennzeichnet, dass** das Dichtgitter (38, 140, 150) aus einem an eine metallische Struktur anvulkanisierten Gummi oder aus einem an eine metallische Struktur angeordnetem Silikon besteht.

9. Getriebesteuereinheit nach einem der vorherigen Ansprüche, **dadurch gekennzeichnet, dass** der Ventilblock (12) sechs Magnetventile (18, 20, 22, 24, 26, 28) aufweist, wobei jedem der Magnetventile (18, 20, 22, 24, 26, 28) des Ventilblocks (12) der Getriebesteuereinheit (10) eine Austrittsöffnung (56, 58, 60, 62, 64, 66) zugordnet ist.

10. Getriebesteuereinheit nach Anspruch 9, **dadurch gekennzeichnet, dass** die sechs Austrittsöffnungen (56, 58, 60, 62, 64, 66) jeweils eine identische Querschnittsgeometrie beziehungsweise den gleichen Durchmesser aufweisen.

## Claims

1. Transmission control unit (10) comprising a valve block (12) carrying a plurality of solenoid valves (18, 20, 22, 24, 26, 28) and comprising an adapter block (30) for connecting the valve block (12) to a transmission to be controlled pneumatically and/or hydraulically by means of a fluid, wherein control channels (42, 44, 46, 48) are formed in the adapter block (30) and are each assigned to at least one solenoid valve (18, 20, 22, 24, 26, 28), wherein on an underside (32), facing the adapter block (30), of a housing (14) of the valve block (12), an outlet opening (56, 58, 60, 62, 64, 66) is assigned to each solenoid valve (18, 20, 22, 24, 26, 28) and can be supplied with the fluid by means of the associated solenoid valve (18, 20, 22, 24, 26, 28), wherein the at least one outlet opening (56, 58, 60, 62, 64, 66) opens into a recess (70, 72, 74, 76) in the underside (32) of the housing (14) of the valve block (12), and each recess (70, 72, 74, 76) of the valve block (12) is enclosed by ribs (80, 82, 84, 86, 88, 90, 92) in the manner of a window frame,
and wherein a sealing grid (38, 130, 140) is arranged between the adapter block (30) and the valve block (12) for individually sealing the control channels (42, 44, 46, 48) from one another and from the external environment (40),
wherein the sealing grid (38, 140, 150) has sealing projections (100, 102, 104, 106, 108, 110, 112), which extend in a net-like manner and are at least largely congruent with the ribs (80, 82, 84, 86, 88, 90, 92) of the valve block (12) and form sealing frames (114, 116, 118, 120), wherein a sealing frame (114, 116, 118, 120) is assigned to each recess (70, 72, 74, 76) and the sealing frames (114, 116, 118, 120) each have a membrane (122, 124, 126, 128) which is formed at most in regions,
wherein at least one membrane (122, 124, 126, 128) has at least one round nozzle opening (130, 132, 134, 136) for at least one associated solenoid valve (18, 20, 22, 24, 26, 28), wherein at least two nozzle openings (130, 132, 134, 136) in at least two membranes (122, 124, 126, 128) are of different sizes.

2. Transmission control unit according to claim 1, **characterized in that** the ribs (80, 82, 84, 86, 88, 90, 92) on the underside (32) of the housing (14) of the valve block (12), the individual sealing frames (114, 116, 118, 120) of the sealing grid (38, 140, 150), and the control channels (42, 44, 46, 48) in the adapter block (30) each have at least largely the same circumferential geometry.

3. Transmission control unit according to claim 1 or 2, **characterized in that** at least one membrane (126) is formed at least in regions as a filter element (142).

4. Transmission control unit according to any of the preceding claims, **characterized in that** the material thickness (M2) of the membranes (122, 124, 126, 128) is at most equal to the material thickness (M1) of the sealing projections (100, 102, 104, 106, 108, 110, 112) circumferentially enclosing the membranes (122, 124, 126, 128).

5. Transmission control unit according to claim 4, **characterized in that** the sealing grid (38, 140, 150) consists of a metal material.

6. Transmission control unit according to claim 4, **characterized in that** the sealing grid (38, 140, 150) consists of a plastics material.

7. Transmission control unit according to claim 5 or 6, **characterized in that** the sealing grid (38, 140, 150) is formed by a metal material and by an elastomer, in particular a vulcanized-on rubber or a silicone.

8. Transmission control unit according to claim 7, **characterized in that** the sealing grid (38, 140, 150) consists of a rubber vulcanized onto a metal structure or of a silicone arranged on a metal structure.

9. Transmission control unit according to any of the preceding claims, **characterized in that** the valve block (12) has six solenoid valves (18, 20, 22, 24, 26, 28), an outlet opening (56, 58, 60, 62, 64, 66) being assigned to each of the solenoid valves (18, 20, 22, 24, 26, 28) of the valve block (12) of the transmission control unit (10).

10. Transmission control unit according to claim 9, **characterized in that** the six outlet openings (56, 58, 60, 62, 64, 66) each have an identical cross-sectional geometry or the same diameter.

## Revendications

1. Unité de commande de transmission (10), comportant un bloc à soupapes (12) portant plusieurs soupapes électromagnétiques (18, 20, 22, 24, 26, 28) et comportant un bloc adaptateur (30) pour le raccordement du bloc à soupapes (12) à une transmission à commander de manière pneumatique et/ou hydraulique au moyen d'un fluide, dans laquelle des canaux de commande (42, 44, 46, 48) sont réalisés dans le bloc adaptateur (30), lesquels sont respectivement associés à au moins une soupape électromagnétique (18, 20, 22, 24, 26, 28), dans laquelle une ouverture de sortie (56, 58, 60, 62, 64, 66) est associée à chaque soupape électromagnétique (18, 20, 22, 24, 26, 28) sur un côté inférieur (32) d'un boîtier (14) du bloc à soupapes (12), lequel côté inférieur est tourné vers le bloc adaptateur (30), laquelle ouverture de sortie peut respectivement être alimentée en fluide au moyen de la soupape électromagnétique (18, 20, 22, 24, 26, 28) associée, dans laquelle l'au moins une ouverture de sortie (56, 58, 60, 62, 64, 66) débouche dans un renfoncement (70, 72, 74, 76) dans le côté inférieur (32) du boîtier (14) du bloc à soupapes (12), et chaque renfoncement (70, 72, 74, 76) du bloc à soupapes (12) est encadré à la manière d'un cadre de fenêtre par des ailettes (80, 82, 84, 86, 88, 90, 92),
et dans laquelle une grille d'étanchéité (38, 130, 140) est disposée entre le bloc adaptateur (30) et le bloc à soupapes (12) pour l'étanchéité individuelle des canaux de commande (42, 44, 46, 48) entre eux ainsi que par rapport à l'environnement (40) extérieur,
dans laquelle la grille d'étanchéité (38, 140, 150) présente des nervures d'étanchéité (100, 102, 104, 106, 108, 110, 112) s'étendant à la manière d'un réseau, au moins en grande partie en coïncidence avec les ailettes (80, 82, 84, 86, 88, 90, 92) du bloc à soupapes (12), lesquelles nervures d'étanchéité forment des cadres d'étanchéité (114, 116, 118, 120), dans laquelle un cadre d'étanchéité (114, 116, 118, 120) est associé à chaque renfoncement (70, 72, 74, 76) et les cadres d'étanchéité (114, 116, 118, 120) présentent respectivement une membrane (122, 124, 126, 128) réalisée au plus dans certaines zones, dans laquelle au moins une membrane (122, 124, 126, 128) présente au moins une ouverture de buse (130, 132, 134, 136) ronde pour au moins une soupape électromagnétique (18, 20, 22, 24, 26, 28) associée, dans laquelle au moins deux ouvertures de buse (130, 132, 134, 136) d'au moins deux membranes (122, 124, 126, 128) sont de tailles différentes.

2. Unité de commande de transmission selon la revendication 1, **caractérisée en ce que** les ailettes (80, 82, 84, 86, 88, 90, 92) sur le côté inférieur (32) du boîtier (14) du bloc à soupapes (12), les cadres d'étanchéité (114, 116, 118, 120) individuels de la grille d'étanchéité (38, 140, 150) ainsi que les canaux de commande (42, 44, 46, 48) dans le bloc adaptateur (30) présentent respectivement au moins en grande partie la même géométrie circonférentielle.

3. Unité de commande de transmission selon la revendication 1 ou 2, **caractérisée en ce qu'au** moins une membrane (126) est réalisée, au moins dans certaines zones, sous forme d'élément filtrant (142).

4. Unité de commande de transmission selon l'une des revendications précédentes, **caractérisée en ce que** l'épaisseur de matériau (M2) des membranes (122, 124, 126, 128) est au plus égale à l'épaisseur de matériau (M1) des nervures d'étanchéité (100, 102, 104, 106, 108, 110, 112) encadrant les membranes (122, 124, 126, 128) côté circonférence.

5. Unité de commande de transmission selon la revendication 4, **caractérisée en ce que** la grille d'étanchéité (38, 140, 150) est constituée d'un matériau métallique.

6. Unité de commande de transmission selon la revendication 4, **caractérisée en ce que** la grille d'étanchéité (38, 140, 150) est constituée d'une matière plastique.

7. Unité de commande de transmission selon la revendication 5 ou 6, **caractérisée en ce que** la grille d'étanchéité (38, 140, 150) est formée avec un matériau métallique et avec un élastomère, en particulier un caoutchouc vulcanisé ou un silicone.

8. Unité de commande de transmission selon la revendication 7, **caractérisée en ce que** la grille d'étanchéité (38, 140, 150) est constituée d'un caoutchouc vulcanisé sur une structure métallique ou d'un silicone disposé sur une structure métallique.

9. Unité de commande de transmission selon l'une des revendications précédentes, **caractérisée en ce que** le bloc à soupapes (12) présente six soupapes électromagnétiques (18, 20, 22, 24, 26, 28), dans lequel une ouverture de sortie (56, 58, 60, 62, 64, 66) est associée à chacune des soupapes électromagnétiques (18, 20, 22, 24, 26, 28) du bloc à soupapes (12) de l'unité de commande de transmission (10).

10. Unité de commande de transmission selon la revendication 9, **caractérisée en ce que** les six ouvertures de sortie (56, 58, 60, 62, 64, 66) présentent respectivement une géométrie de section transversale identique ou le même diamètre.
